# EUROPÄISCHE PATENTSCHRIFT

(11) **EP 3 050 755 B1**
(45) Veröffentlichungstag und Bekanntmachung des Hinweises auf die Patenterteilung: **20.06.2018**
(21) Anmeldenummer: 16151217.3
(22) Anmeldetag: 14.01.2016
(51) Int. Cl.: B60R 5/04

(54) **LADERAUMABDECKUNG MIT SCHALLABSORBIERENDEN EIGENSCHAFTEN**
LOAD COMPARTMENT COVER HAVING SOUND-ABSORBING CHARACTERISTICS
DISPOSITIF DE RECOUVREMENT DE L'ESPACE DE CHARGEMENT A PROPRIETES D'ABSORPTION ACOUSTIQUE

(30) Priorität: 27.01.2015 DE 102015201320
(43) Veröffentlichungstag der Anmeldung: 03.08.2016
(73) Patentinhaber: Ford Global Technologies, LLC, Dearborn, MI 48126 (US)
(72) Erfinder: Rittmann, Jan, 50676 Köln (DE); Bock, Andreas, 40789 Monheim (DE)
(74) Vertreter: Dörfler, Thomas

(56) Entgegenhaltungen:
- EP-A1- 0 816 583
- EP-A1- 1 884 409
- DE-B4-102008 017 084
- DE-C1- 19 833 031
- US-B2- 8 573 358

## Beschreibung

Die Erfindung betrifft eine Laderaumabdeckung für Fahrzeuge mit einem zwischen den Rücksitzen und einer Hecktür vorgesehenen Laderaum, bestehend aus einer in einem Abstand über dem Boden des Laderaums angeordneten schallabsorbierenden Abtrennung aus einem für Schallwellen teildurchlässigem Material.

Eine bekannte Laderaumabdeckung der genannten Art (DE 10 2008 017 084 B4) soll dazu dienen, ein Audiosystem eines Fahrzeugs so auszugestalten, dass es ein natürliches Klangempfinden insbesondere im Bereich tiefer Frequenzen ermöglicht und die Ausbildung von stehenden Wellen weitgehend vermeidet. Zu diesem Zweck ist bei dem bekannten System über dem Laderaum eine Platte angeordnet, die aus einem steifen Gitter, vorzugsweise einem Metallgitter, ausreichender Festigkeit und Masse besteht, die mit einem textilen, filzartigen oder auch leder- oder kunstlederartigem Überzug versehen ist.

Zur Verbesserung der allgemeinen Raumakustik sind auch bereits Helmholtz-Resonatoren als Schallabsorber bekannt (Wikipedia Helmholtz-Resonator). Diese bestehen im Wesentlichen aus einer schwingenden Masse und einer Feder. Die auftretende Schallenergie wird in kinetische Energie der Masse umgewandelt. Die maximale Absorption tritt im Bereich der Eigenfrequenz auf, wo die Masse am stärksten schwingt. Bei der schwingenden Masse handelt es sich um die in den Löchern befindliche Luft. Mittels Platten aus Sperrholz, Gipskarton, Preßspan, Kunstleder oder auch Folien wird dieses Luftvolumen begrenzt. Als Feder wirkt das hinter der Platte eingeschlossene Luftvolumen. Der Vorteil derartiger Resonanzabsorber ist seine hohe Schallabsorption, insbesondere bei tiefen Frequenzen, wie sie häufig auch in den Fahrgasträumen von Kraftfahrzeugen, insbesondere bei Verwendung von Audiosystemen, auftritt.

Ferner sind sehr wirksame mehrschichtige Schallabsorptionsplatten bekannt (US 8,573,358 B2), die aus mikroperforierten Folien bestehen, zwischen denen ein Maschengitter vorhanden ist, um die Folien auf Abstand zu halten.
Ferner sind auf dem Gebiet der Schalldämmung für vertikale Glasfassaden von Gebäuden Rollos bekannt (DE 198 33 031 C1), die aus einem Behang aus mehreren Behanglagen bestehen und die dem Oberbegriff des Anspruchs 1 bzw. 5 entsprechen. Jede Behanglage ist dabei einer Wickelwelle zugeordnet. Die Wickelwellen sind schräg übereinander angeordnet und sind zum Auf- und Abwickeln des Behangs gegensinnig zueinander antreibbar. Dabei sind die beiden Wickelwellen über Zahnräder miteinander verbunden und werden mittels einer Betätigungskette in Rotation versetzt. Dadurch werden sie gegenläufig angetrieben und bewirken, dass der vertikale Behang wahlweise hinuntergefahren oder heraufgezogen werden kann.
Der Erfindung liegt die Aufgabe zugrunde, eine schallabsorbierende Laderaumabdeckung zu schaffen, die sich in der Praxis leicht handhaben lässt und keine Nachteile gegenüber bekannten Laderaumabdeckungen aufweist.
Eine erste Lösung dieser Aufgabe wird durch die Merkmale des Anspruchs 1 geschaffen, nämlich dadurch, dass die Abtrennung aus mehreren im Abstand übereinander angeordneten Folien gebildet ist, dass zumindest eine der Folien mit einer Mikroperforierung versehen ist, dass zwischen den Folien ausschließlich ein Luftpolster vorgesehen ist, dass zur Aufnahme der Folien eine gemeinsame Kassette vorgesehen ist, in der die Folien wahlweise auf- und abspulbar sind, dass in der Kassette eine einzige federbelastete Wickelspule vorgesehen ist, auf der die Folien gemeinsam auf- und abwickelbar sind, und dass am oder nahe dem Ausgang der Kassette mindestens ein Abstandshalter zwischen den Folien angeordnet ist.
Bei betriebsinternen Versuchen hat sich herausgestellt, dass großflächige Abstandshalter zwischen den Folien nicht erforderlich sind und dass die gewünschte Schallabsorption auch dann eintritt, wenn zwischen den Folien ausschließlich ein Luftpolster vorgesehen ist. Erst der Verzicht auf derartige Abstandshalter zwischen den Folien schafft die Möglichkeit einer bequemen Handhabung der schallabsorbierenden Abtrennung für eine Laderaumabdeckung.

Dadurch ist es möglich, die Folien bei Nichtgebrauch aufzuwickeln und das Volumen des Wickels gering zu halten, was im Kraftfahrzeugbereich eine wesentliche Voraussetzung für eine Laderaumabdeckung ist.

Besonders vorteilhaft ist bei der erfindungsgemäßen Lösung, dass eine gemeinsame Kassette vorgesehen sein kann, in der die Folien wahlweise auf- oder abspulbar sind. Aufgrund der Tatsache, dass keine großflächigen Abstandshalter für die Folien vorgesehen sein müssen, kann das aufgewickelte Volumen extrem klein gehalten werden, sodass übliche Kassetten zum Auf- und Abspulen bekannter Laderaumabdeckungen verwendet werden können.

Es genügt bereits, dass die Abtrennung aus zwei im Abstand übereinander angeordneten Folien besteht, zwischen denen das gewünschte Luftpolster gebildet wird.

Zum Vor- und Zurückziehen der Folien ist vorzugsweise ein gemeinsamer Handgriff vorgesehen. Dieser kann derart mit den Folien verbunden sein, dass die Folien an dem Handgriff in einem Abstand übereinander befestigt sind, sodass beim Herausziehen der Folien aus der Kassette die Folien an dem Handgriff in einem vorgegebenen Abstand voneinander bzw. übereinander gehalten werden.

Eine zweite Lösung der der Erfindung zugrundeliegenden Aufgabe wird durch die Merkmale des Anspruchs 5 geschaffen, nämlich dadurch, dass die Abtrennung aus einer Folie mit zwei im Abstand übereinander angeordneten Teilstücken gebildet ist, dass zumindest eines der Teilstücke mit einer Mikroperforierung versehen ist, dass zwischen den Teilstücken ausschließlich ein Luftpolster vorgesehen ist, dass zur Aufnahme der Folie eine Kassette vorgesehen ist, in der die Folie wahlweise auf- und abwickelbar ist, dass in der Kassette eine einzige federbelastete Wickelspule angeordnet ist, auf der das erste Ende der Folie auf- und abwickelbar ist, dass das zweite Ende der Folie in einem Abstand unter oder über dem ersten Ende an der Kassette befestigt ist und dass die Folie über eine an einem Handgriff vorgesehene Umlenkrolle geführt ist.

Auch bei dieser Ausführungsform ist es auf sehr elegante Weise möglich, zwei Folien in einem Abstand übereinander aus einer Kassette herauszuziehen, wobei als Abstandshalter im Bereich der Kassette vorzugsweise der Abstand zwischen der Oberseite der Wickelspule und der Befestigungsstelle des zweiten Endes der Folie und im Bereich des Handgriffs die Umlenkrolle dient.

Diese Ausführungsform bietet auch die Möglichkeit, die Folie über ihre ausziehbare Länge aus zwei unterschiedlich ausgebildeten Teilstücken herzustellen, sodass im ausgezogenen Zustand der Abdeckung zwei unterschiedliche Folien im Abstand übereinander angeordnet sein können, um den Schallabsorptionseffekt optimal zu gestalten.
Die Wickelspulen können über selbst arretierende Getriebe verfügen, sodass die Handhabung ebenso wie bei den bekannten einfachen flexiblen Laderaumabdeckungen nach Art eines Schnapprollos erfolgen kann.
Die für die Schallabsorption verwendeten, übereinander angeordneten Folien können identisch oder auch unterschiedlich ausgebildet sein, je nachdem welche Randbedingungen zu erfüllen sind. Dabei kann die Ausführung der Mikroperforierung variieren, sowohl zwischen den Folien als auch auf einer Folie selbst. Variationen der Mikroperforation beinhalten Änderungen des Lochabstandes, der Lochform, des Lochdurchmessers, und der Lochanordnung auf der Folie.
In jedem Falle sollten die Folien aber nur eine Dicke von unter 1 mm aufweisen. Zweckmäßig sollten Folien mit einer Dicke von 0,05 bis 0,4 mm, und vorzugsweise mit einer Dicke von 0,2 bis 0,4 mm Verwendung finden. Der Lochdurchmesser der Mikroperforation sollte kleiner 1 mm betragen, wobei Durchmesser zwischen 0,1 mm bis 0,4 mm bevorzugt sind.
Ferner können zur Optimierung der Schallabsorption auch die Lochabstände der Mikroperforierung variiert werden, wobei die Abstände vorzugsweise in der Größenordnung von 2 bis 10 mm liegen sollten.
Je nach Anwendungsfall und nach den geforderten Randbedingungen kann der Abstand zwischen den Folien variiert werden.

Ferner kann die die Folien aufnehmende Kassette auch relativ zu dem Boden des Laderaums in der Höhe verstellbar sein, um optimale Schallabsorptionsbedingungen zu schaffen. Die Erfindung ist in der Zeichnung beispielhaft dargestellt und im Einzelnen an Hand der Zeichnung beschrieben. Es zeigen:
- Fig. 1:: eine schematische Darstellung einer Laderaumabdeckung, bestehend aus zwei übereinander angeordneten Folien mit Mikroperforation,
- Fig. 2:: ein Diagramm, in welchem für verschiedene Laderaumabdeckungen der Absorptionsgrad über der Schallfrequenz dargestellt ist,
- Fig. 3:: ein Ausführungsbeispiel einer technischen Ausführung des Stands der Technik,
- Fig. 4:: ein erstes Ausführungsbeispiel der technischen Ausführung der Erfindung und
- Fig. 5:: ein zweites Ausführungsbeispiel der technischen Ausführung der Erfindung.

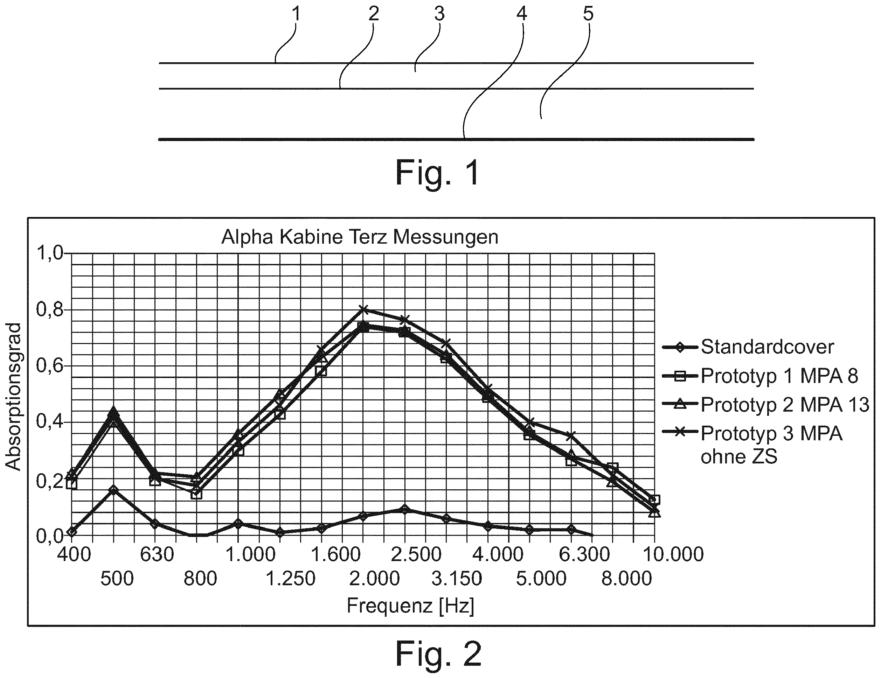

Nach der schematischen Darstellung in Fig. 1 der Zeichnung besteht die erfindungsgemäße Laderaumabdeckung, die für Fahrzeuge mit einem zwischen den Rücksitzen und einer Hecktür angeordneten Laderaum 5 vorgesehen ist, aus einer schallabsorbierenden Abtrennung, die aus zwei im Abstand übereinander angeordneten Folien 1 und 2 gebildet ist. Zwischen der oberen Folie 1 und der unteren Folie 2 ist ein freier Raum in Form eines Luftpolsters 3 vorgesehen. Die beiden Folien 1 und 2 sind in einem Abstand über dem Boden 4 des Laderaums 5 angeordnet.
Die beiden Folien 1 und 2 bestehen aus für Schallwellen teildurchlässigen Material und sind mit einer in der Zeichnung nicht näher dargestellten Mikroperforierung versehen.

Die Folien 1 und 2 befinden sich in einem gespannten Zustand, sodass der Abstand zwischen ihnen über ihre gesamte Länge etwa konstant ist, sodass das für die Schallabsorption erforderliche Luftpolster 3 vorhanden ist.

Die Folien 1 und 2 sollten in der Praxis eine Dicke von weniger als 1 mm aufweisen. In Versuchen haben sich Folien mit einer Dicke von 0,05 bis 0,4 mm bewährt. Bevorzugt werden Foliendicken von 0,2 bis 0,4 mm. Der Lochdurchmesser der Mikroperforation sollte kleiner 1 mm betragen, wobei Durchmesser zwischen 0,1 mm bis 0,4 mm bevorzugt sind.

Der Abstand der Löcher der Mikroperforation ist teilweise davon abhängig, welche Schallwellenfrequenz am stärksten gedämpft werden soll. Für den in Kraftfahrzeugen anzutreffenden Schallpegel sollte der Abstand der Löcher der Mikroperforation zwischen 2 und 10 mm liegen.

Zur Optimierung der Schallabsorption können auch noch die Abstände zwischen der oberen Folie 1 und der unteren Folie 2 variiert werden, und es kann auch der Abstand der aus den beiden Folien 1 und 2 bestehenden Abtrennung gegenüber dem Boden 4 des Laderaums 5 verändert werden.

Bei dem Diagramm in Fig. 2 ist für verschiedene Laderaumabdeckungen der Absorptionsgrad über der Schallfrequenz dargestellt.

Die untere Kurve (Standardcover) zeigt die Absorptionskurve über der Schallfrequenz bei einer herkömmlichen Abdeckung, die aus einer einfachen flexiblen Plane besteht.

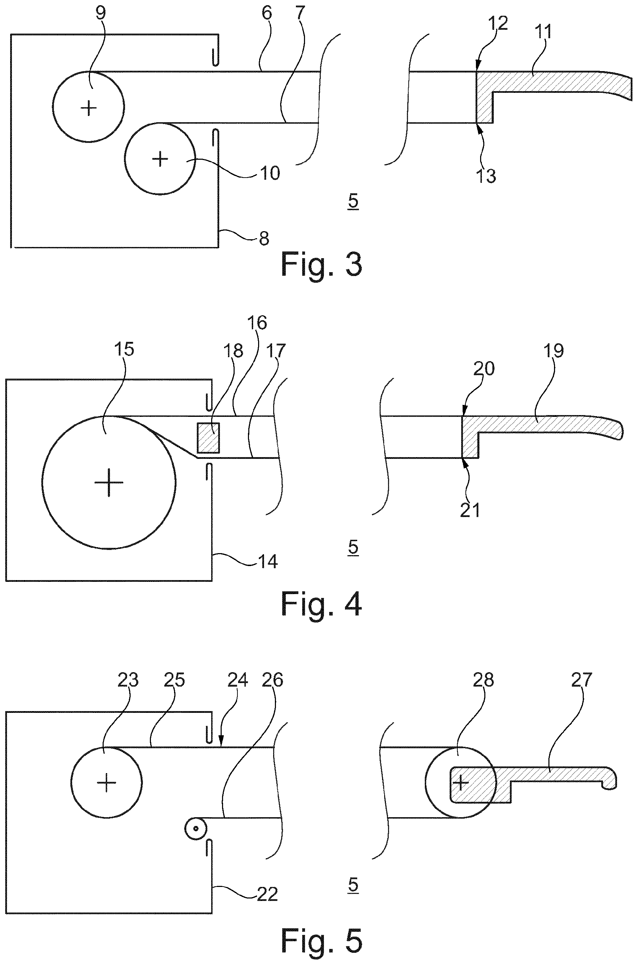

Bei den drei oberen Kurven handelt es sich um Laderaumabdeckungen, die von dem Prinzip des Helmholtz-Resonators Gebrauch machen. Die beiden mit Mikroperforation versehenen Folien 1 und 2 bilden dabei eine Abgrenzung der schwingenden Luftmasse, die mit dem als Feder dienenden Luftpolster 3 kommuniziert. Die auftreffende Schallenergie wird dabei zu einem großen Teil in kinetische Energie der Masse umgewandelt und somit durch die viskose Reibung an den Lochrändern absorbiert.
Bei der Kurve "Prototyp 1 MPA 8" und der Kurve "Prototyp 2 MPA 13" war jeweils eine Zwischenschicht zwischen den beiden Folien 1 und 2 vorgesehen, mit der die Folien 1 und 2 relativ zueinander auf genauem Abstand gehalten wurden, und die gleichzeitig als Feder diente.
Ein Versuch ohne eine solche Zwischenschicht gemäß "Prototyp 3 MPA" zeigt eindeutig, dass auf eine Zwischenschicht, wie sie in Schallabsorptionsplatten bisher üblich war, überhaupt nicht erforderlich ist, denn die drei Kurven laufen nahezu auf demselben Niveau.
Aufgrund dieser gewonnenen Erkenntnisse, dass nämlich eine aufwendige Zwischenschicht zwischen den Folien 1 und 2 nicht erforderlich ist, macht dieses Prinzip für Laderaumabdeckungen erst interessant, denn es sind nunmehr keine schweren starren Absorptionsplatten mehr erforderlich, die sich bei Nichtgebrauch nur umständlich verstauen lassen.
Aufgrund dieser gewonnenen Erkenntnisse sind nunmehr elegante und zweckmäßige Lösungen für Laderaumabdeckungen möglich, wie sie als Beispiele in den Figuren 3 bis 5 in schematischer Form dargestellt sind.

Bei dem Ausführungsbeispiel des Stands der Technik gemäß Fig. 3 ist zur Aufnahme der flexiblen Folien 6 und 7 eine gemeinsame Kassette 8 vorgesehen. In der Kassette 8 ist für jede Folie 6 bzw. 7 eine gesonderte, federbelastete Wickelspule 9 bzw. 10 installiert. Die beiden Wickelspulen 9 und 10 sind in einem Abstand übereinander angeordnet, sodass die beiden Folien 6 und 7 horizontal und in einem vertikalen Abstand zueinander aus der Kassette 8 herausgezogen werden können. Beide Folien 6 und 7 sind an einem gemeinsamen Handgriff 11 befestigt, wobei die beiden Befestigungspunkte 12 und 13 an dem Handgriff 11 in dem gleichen Abstand zueinander angeordnet sind, wie die beiden Wickelspulen 9 und 10, um den Abstand zwischen den Folien 6 und 7 einzuhalten.

Wenn die beiden Folien 6 und 7 mit Hilfe des Handgriffs 11 aus der Kassette entgegen der Federvorspannung der Wickelspule 9 und 10 herausgezogen werden, so bleiben die beiden Folien 6 und 7 stets im gleichen Abstand übereinander angeordnet, sodass zwischen beiden das für die Schallabsorption erforderliche Luftpolster 3 erhalten bleibt.
Die federbelasteten Wickelspulen 9 und 10 sind mit einem in der Zeichnung nicht näher dargestellten selbstarretierenden Getriebe ausgerüstet, sodass die beiden Folien 6 und 7 mit Hilfe des Handgriffs 11 nach Art eines Schnapprollos ein- und ausgefahren werden können.

Bei den in Fig. 4 dargestellten ersten Ausführungsbeispiel der Erfindung ist in einer Kassette 14 nur eine einzige federbelastete Wickelspule 15 vorgesehen, auf der die beiden Folien 16 und 17 gemeinsam auf- und abwickelbar sind.
Um auch bei dieser Ausführungsform einen vorgegebenen Abstand zwischen den beiden Folien 16 und 17 einhalten zu können, ist am oder nahe dem Ausgang der Kassette 14 ein Abstandshalter 18 zwischen den beiden Folien 16 und 17 angeordnet. Die obere Folie 16 wird dabei über dem Abstandshalter 18 und die untere Folie 17 unter dem Abstandshalter 18 entlanggeführt, sodass die Höhe des Abstandshalters 18 den Abstand zwischen den beiden Folien 16 und 17 vorgibt.
Auch bei diesem Ausführungsbeispiel ist für beide Folien 16 und 17 ein gemeinsamer Handgriff 19 vorgesehen. Um auch auf der Seite des Handgriffs 19 den Abstand der beiden Folien 16 und 17 relativ zueinander einzuhalten, sind an dem Handgriff 19 ebenso wie bei dem in Fig. 3 dargestellten Ausführungsbeispiel Befestigungspunkte 20 und 21 für die Folien 16 und 17 vorgesehen, die genau in dem Abstand des vorgegebenen Zwischenraums zwischen den Folien 16 und 17 angeordnet sind.
Die Handhabung dieses Ausführungsbeispiels entspricht dem in Fig. 3 dargestellten Ausführungsbeispiel, denn es braucht lediglich der Handgriff betätigt und die Folien aus der Kassette 14 entgegen der Federspannung der Wickelspule 15 herausgezogen zu werden. Der Handgriff kann dann an dem der Kassette 14 gegenüberliegenden Ende des Laderaums in eine in der Zeichnung nicht näher dargestellte Halterung eingeklinkt werden.

Bei dem in Fig. 5 dargestellten zweiten Ausführungsbeispiel der Erfindung ist in einer Kassette 22 wiederum nur eine einzige federbelastete Wickelspule 23 angeordnet. Auf dieser Wickelspule 23 ist ein erstes Ende 25 einer Folie 24 auf- und abwickelbar, während das zweite Ende 26 der Folie 24 in einem Abstand unterhalb des ersten Endes 25 an der Kassette 22 befestigt ist. Die Folie 24 läuft dabei über eine an einem Handgriff 27 vorgesehene Umlenkrolle 28, deren Durchmesser genau dem vorgegebenen Abstand zwischen den beiden Folienenden 25 und 26 entspricht.
Bei den Ausführungsbeispielen gemäß Fig. 3 und 4 können die Folien 6 und 7 bzw. 16 und 17 ohne weiteres unterschiedlich ausgebildet sein. Die können unterschiedliche Stärken aufweisen und mit einer unterschiedlichen Mikroperforation versehen sein, wobei sich die jeweilige Ausführungsform nach den vorgegebenen Randbedingungen richtet.
Das Gleiche kann auch bei dem Ausführungsbeispiel gemäß Fig. 5 erzielt werden, bei dem nur eine einzige zusammenhängende Folie 24 verwendet wird. Bei diesem Ausführungsbeispiel ist es aber möglich, die Folie 24 in zwei unterschiedliche Abschnitte aufzuteilen, sodass bei abgespulter Folie 24 unterschiedliche Abschnitte übereinander zu liegen kommen. Dies ist beispielsweise dadurch möglich, dass zwei unterschiedlich ausgebildete Folien miteinander verbunden werden oder dass die Folie 24 mit unterschiedlich ausgebildeten Abschnitten ausgestattet wird.
In allen drei Ausführungsbeispielen gemäß Fig. 3 bis 5 können die Kassetten 8, 14 und 22 in der Höhe verstellt werden, sodass der Abstand der schallabsorbierenden Folien über dem Boden 4 des Laderaums 5 variiert werden kann.

Außerdem ist es auch möglich, den Abstand zwischen den Folien zu variieren, indem die jeweiligen Befestigungspunkte an den Handgriffen und im Bereich der Kassetten eingestellt werden, um die gewünschten schallabsorbierenden Eigenschaften der erfindungsgemäßen Laderaumabdeckung zu erzielen.

### Bezugszeichenliste

- 1: obere Folie
- 2: untere Folie
- 3: Luftpolster
- 4: Boden des Laderaums
- 5: Laderaum
- 6: Folie
- 7: Folie
- 8: Kassette
- 9: Wickelspule
- 10: Wickelspule
- 11: Handgriff
- 12: Befestigungspunkt
- 13: Befestigungspunkt
- 14: Kassette
- 15: Wickelspule
- 16: obere Folie
- 17: untere Folie
- 18: Abstandshalter
- 19: Handgriff
- 20: Befestigungspunkt
- 21: Befestigungspunkt
- 22: Kassette
- 23: Wickelspule
- 24: Folie
- 25: erstes Ende der Folie 24
- 26: zweites Ende der Folie 24
- 27: Handgriff
- 28: Umlenkrolle

## Patentansprüche

1. Laderaumabdeckung für Fahrzeuge mit einem zwischen den Rücksitzen und einer Hecktür vorgesehenen Laderaum (5), bestehend aus einer in einem Abstand über dem Boden (4) des Laderaums (5) anordnenbaren schallabsorbierenden Abtrennung aus einem für Schallwellen teildurchlässigem Material, wobei die Abtrennung aus mehreren im Abstand übereinander angeordneten Folien (16, 17) gebildet ist,
- wobei zumindest eine der Folien (16, 17) mit einer Mikroperforierung versehen ist,
- wobei zwischen den Folien (16, 17) ausschließlich ein Luftpolster (3) vorgesehen ist,
- wobei zur Aufnahme der Folien (16, 17) eine gemeinsame Kassette (14) vorgesehen ist, in der die Folien (16, 17) wahlweise auf- und abspulbar sind, ist, **dadurch gekennzeichnet,**
- **dass** in der Kassette (14) eine einzige federbelastete Wickelspule (15) vorgesehen ist, auf der die Folien (16, 17) gemeinsam auf- und abwickelbar sind, und
- **dass** am oder nahe dem Ausgang der Kassette (14) mindestens ein Abstandshalter (18) zwischen den Folien (16, 17) angeordnet ist.

2. Laderaumabdeckung nach Anspruch 1,
**dadurch gekennzeichnet,**
**dass** die Abtrennung aus zwei im Abstand übereinander angeordneten Folien (16, 17) gebildet ist.

3. Laderaumabdeckung nach Anspruch 1 oder 2,
**dadurch gekennzeichnet,**
**dass** zum Betätigen der Folien (16, 17) ein gemeinsamer Handgriff (19) vorgesehen ist.

4. Laderaumabdeckung nach Anspruch 3,
**dadurch gekennzeichnet,**
**dass** die Folien (16, 17) an dem Handgriff (19) in einem Abstand übereinander befestigt sind.

5. Laderaumabdeckung für Fahrzeuge mit einem zwischen den Rücksitzen und einer Hecktür vorgesehenen Laderaum (5), bestehend aus einer in einem Abstand über dem Boden (4) des Laderaums (5) anordnenbaren schallabsorbierenden Abtrennung aus einem für Schallwellen teildurchlässigem Material, wobei die Abtrennung aus einer Folie (24) mit zwei im Abstand übereinander angeordneten Teilstücken (Enden 25, 26) gebildet ist,
- wobei zumindest eines der Teilstücke (Enden 25, 26) mit einer Mikroperforierung versehen ist,
- wobei zwischen den Teilstücken (Enden 25, 26) ausschließlich ein Luftpolster (3) vorgesehen ist,
- wobei zur Aufnahme der Folie (24) eine Kassette (22) vorgesehen ist, in der die Folie (24) wahlweise auf- und abwickelbar ist, **dadurch gekennzeichnet,**
- **dass** in der Kassette (22) eine einzige federbelastete Wickelspule (23) angeordnet ist, auf der das erste Ende (25) der Folie (24) auf- und abwickelbar ist,
- **dass** das zweite Ende (26) der Folie (24) in einem Abstand unter oder über dem ersten Ende (25) an der Kassette (22) befestigt ist und
- **dass** die Folie (24) über eine an einem Handgriff (27) vorgesehene Umlenkrolle (28) geführt ist.

6. Laderaumabdeckung nach Anspruch 5,
dass die Folie (24) über ihre ausziehbare Länge aus zwei unterschiedlich ausgebildeten Teilstücken (Enden 25, 26) besteht.

7. Laderaumabdeckung nach Anspruch 1 oder 5,
**dadurch gekennzeichnet,**
**dass** die Wickelspule (15; 23) über ein selbstarretierendes Getriebe verfügt.

8. Laderaumabdeckung nach einem der vorhergehenden Ansprüche,
**dadurch gekennzeichnet,**
**dass** die Folien (16, 17; 24) eine Dicke von unter 1 mm und vorzugsweise eine Dicke von 0,05 mm bis 0,4 mm aufweisen.

9. Laderaumabdeckung nach einem der vorhergehenden Ansprüche,
**dadurch gekennzeichnet,**
**dass** die Mikroperforation einer Folie (16, 17; 24) Variationen zumindest bezüglich des Lochabstandes, der Lochform, des Lochdurchmessers und/oder der Lochanordnung aufweist.

10. Laderaumabdeckung nach einem der vorhergehenden Ansprüche,
**dadurch gekennzeichnet,**
**dass** die Abstände der Löcher der in den Folien (16, 17; 24) vorgesehenen Mikroperforation zwischen 2 mm und 10 mm liegen.

11. Laderaumabdeckung nach einem der vorhergehenden Ansprüche,
**dadurch gekennzeichnet,**
**dass** der Abstand zwischen den Folien (16,17) bzw. zwischen den Enden (25, 26) der Folie (24) variierbar ist.

12. Laderaumabdeckung nach einem der vorhergehenden Ansprüche,
**dadurch gekennzeichnet,**
**dass** die die Folien (16, 17; 24) aufnehmende Kassette (14; 22) relativ zu dem Boden (4) des Laderaums (5) in der Höhe verstellbar ist.

## Claims

1. Load compartment cover for vehicles having a load compartment (5) that is provided between the rear seats and a tailgate, said load compartment cover consisting of a sound-absorbing partition that can be arranged in a space above the base (4) of the load compartment (5) and is embodied from a material that is in part permeable to sound waves, wherein
the partition is formed from multiple thin sheets (16, 17) that are arranged spaced apart one above the other,
- wherein at least one of the thin sheets (16, 17) is provided with a micro perforation,
- wherein only one air cushion (3) is provided between the thin sheets (16, 17),
- wherein a common cassette (14) is provided to receive the thin sheets (16, 17) and the thin sheets (16, 17) can be selectively wound or unwound in said cassette, **characterized**
- **in that** a single spring-loaded winding spool (15) is provided in the cassette (14) and the thin sheets (16, 17) can be wound and unwound jointly on said winding spool and
- **in that** at least one spacer (18) is arranged between the thin sheets (16, 17) on the or near the exit of the cassette (14).

2. Load compartment cover according to Claim 1,
**characterized**
**in that** the partition is formed from two thin sheets (16, 17) that are arranged spaced apart one above the other.

3. Load compartment cover according to Claim 1 or 2,
**characterized**
**in that** a common hand grip (19) is provided so as to actuate the thin sheets (16, 17).

4. Load compartment cover according to Claim 3,
**characterized**
**in that** the thin sheets (16, 17) are fastened to the hand grip (19) spaced apart one above the other.

5. Load compartment cover for vehicles having a load compartment (5) that is provided between the rear seats and a tailgate, said load compartment cover consisting of a sound-absorbing partition that can be arranged in a space above the base (4) of the load compartment (5) and is embodied from a material that is in part permeable to sound waves, wherein
the partition is formed from a thin sheet (24) with two part pieces (ends 25, 26) arranged spaced apart one above the other,
- wherein at least one of the part pieces (ends 25, 26) is provided with a micro perforation,
- wherein only one air cushion (3) is provided between the part pieces (ends 25, 26),
- wherein a cassette (22) is provided to receive the thin sheet (24), and the thin sheet (24) can be selectively wound or unwound in said cassette, **characterized**
- **in that** a single spring-loaded winding spool (23) is arranged in the cassette (22) and it is possible to wind or unwind the first end (25) of the thin sheet (24) on said winding spool,
- **in that** the second end (26) of the thin sheet (24) is fastened to the cassette (22) in a spacing below or above the first end (25), and
- **in that** the thin sheet (24) is guided over a deflecting roller (28) that is provided on a hand grip (27).

6. Load compartment cover according to Claim 5,
in that the thin sheet (24) consists of two part pieces (ends 25, 26) that are embodied so as to be different over the length that said thin sheet that can be drawn out.

7. Load compartment cover according to Claim 1 or 5,
**characterized**
**in that** the winding spool (15; 23) comprises a self-stopping drive.

8. Load compartment cover according to any of the preceding claims,
**characterized**
**in that** the thin sheets (16, 17; 24) comprise a thickness of below 1 mm and preferably a thickness of 0.05 mm to 0.4 mm.

9. Load compartment cover according to any of the preceding claims,
**characterized**
**in that** the micro perforation of a thin sheet (16, 17; 24) comprises variations at least in relation to the spacing of the holes, the shape of the holes, the diameter of the holes and/or the arrangement of the holes.

10. Load compartment cover according to any of the preceding claims,
**characterized**
**in that** the spacings of the holes of the micro perforation that is provided in the thin sheets (16, 17; 24) is between 2 mm and 10 mm.

11. Load compartment cover according to any of the preceding claims,
**characterized**
**in that** the spacing between the thin sheets (16, 17) or between the ends (25, 26) of the thin sheet (24) can be varied.

12. Load compartment cover according to any of the preceding claims,
**characterized**
**in that** the cassette (14; 22) that receives the thin sheets (16, 17; 24) can be adjusted in terms of its height relative to the base (4) of the load compartment (5).

## Revendications

1. Recouvrement d'espace de chargement pour véhicules comprenant un espace de chargement (5) prévu entre les sièges arrière et une porte arrière, constitué d'une séparation absorbant les sons, pouvant être disposée à distance au-dessus du fond (4) de l'espace de chargement (5) et constituée d'un matériau partiellement perméable aux ondes sonores,
la séparation étant formée de plusieurs feuilles (16, 17) superposées à distance les unes au-dessus des autres,
- au moins l'une des feuilles (16, 17) étant pourvue d'une microperforation,
- exclusivement un coussin d'air (3) étant prévu entre les feuilles (16, 17),
- une cassette commune (14) étant prévue pour recevoir les feuilles (16, 17), dans laquelle les feuilles (16, 17) peuvent être enroulées et déroulées de manière sélective,
**caractérisé en ce que**
- dans la cassette (14) est prévue une bobine d'enroulement unique sollicitée par ressort (15) sur laquelle les feuilles (16, 17) peuvent être enroulées et déroulées ensemble, et
- **en ce que** sur ou à proximité de la sortie de la cassette (14) est disposé au moins un élément d'espacement (18) entre les feuilles (16, 17).

2. Recouvrement d'espace de chargement selon la revendication 1,
**caractérisé en ce que**
la séparation est formée de deux feuilles (16, 17) disposées à distance l'une au-dessus de l'autre.

3. Recouvrement d'espace de chargement selon la revendication 1 ou 2,
**caractérisé en ce que**
qu'il est prévu une poignée commune (19) pour l'actionnement des feuilles (16, 17).

4. Recouvrement d'espace de chargement selon la revendication 3,
**caractérisé en ce que**
les feuilles (16, 17) sont fixées à distance l'une au-dessus de l'autre au niveau de la poignée (19).

5. Recouvrement d'espace de chargement pour véhicules comprenant un espace de chargement (5) prévu entre les sièges arrière et une porte arrière, constitué d'une séparation absorbant les sons, pouvant être disposée à distance au-dessus du fond (4) de l'espace de chargement (5) et constituée d'un matériau partiellement perméable aux ondes sonores,
la séparation étant formée d'une feuille (24) comprenant deux pièces partielles (extrémités 25, 26) disposées à distance l'une au-dessus de l'autre,
- au moins l'une des pièces partielles (extrémités 25, 26) étant pourvue d'une microperforation,
- exclusivement un coussin d'air (3) étant prévu entre les pièces partielles (extrémités 25, 26),
- une cassette (22) étant prévue pour recevoir la feuille (24), dans laquelle la feuille (24) peut être enroulée et déroulée de manière sélective,
**caractérisé**
- **en ce que** dans la cassette (22) est disposée une bobine d'enroulement unique sollicitée par ressort (23), sur laquelle la première extrémité (25) de la feuille (24) peut être enroulée et déroulée,
- **en ce que** la deuxième extrémité (26) de la feuille (24) est fixée à distance en dessous ou au-dessus de la première extrémité (25) sur la cassette (22), et
- **en ce que** la feuille (24) est guidée par le biais d'une poulie de renvoi (28) prévue au niveau d'une poignée (27).

6. Recouvrement d'espace de chargement selon la revendication 5,
en ce que la feuille (24) se compose, sur sa longueur extractible, de deux pièces partielles (extrémités 25, 26) réalisées différemment.

7. Recouvrement d'espace de chargement selon la revendication 1 ou 5,
**caractérisé en ce que**
la bobine d'enroulement (15 ; 23) dispose d'une transmission à auto-blocage.

8. Recouvrement d'espace de chargement selon l'une quelconque des revendications précédentes,
**caractérisé en ce que**
les feuilles (16, 17 ; 24) présentent une épaisseur inférieure à 1 mm et de préférence une épaisseur de 0,05 mm à 0,4 mm.

9. Recouvrement d'espace de chargement selon l'une quelconque des revendications précédentes,
**caractérisé en ce que**
les microperforations d'une feuille (16, 17 ; 24) présentent des variations au moins en termes d'espacement des trous, de forme des trous, de diamètre des trous et/ou de disposition des trous.

10. Recouvrement d'espace de chargement selon l'une quelconque des revendications précédentes,
**caractérisé en ce que**
les espacements entre les trous des microperforations prévues dans les feuilles (16, 17 ; 24) sont compris entre 2 mm et 10 mm.

11. Recouvrement d'espace de chargement selon l'une quelconque des revendications précédentes,
**caractérisé en ce que**
la distance entre les feuilles (16, 17) ou entre les extrémités (25, 26) de la feuille (24) peut être variée.

12. Recouvrement d'espace de chargement selon l'une quelconque des revendications précédentes,
**caractérisé en ce que**
la cassette (14 ; 22) recevant les feuilles (16, 17 ; 24) peut être réglée en hauteur par rapport au fond (4) de l'espace de chargement (5).
